# EUROPÄISCHE PATENTSCHRIFT

(11) **EP 0 540 849 B1**
(45) Veröffentlichungstag und Bekanntmachung des Hinweises auf die Patenterteilung: **01.03.1995**
(21) Anmeldenummer: 92115121.3
(22) Anmeldetag: 04.09.1992
(51) Int. Cl.: B29B 7/46

(54) **Verfahren und Vorrichtung zur Herstellung von mit Zusatzstoffen gefüllten Kunststoffen**
Method and device for making plastics filled with additives
Procédé et dispositif pour fabriquer des matières plastiques remplies de matières additionnelles

(30) Priorität: 30.10.1991 DE 4135675
(43) Veröffentlichungstag der Anmeldung: 12.05.1993
(73) Patentinhaber: Werner & Pfleiderer GmbH, 70469 Stuttgart (DE)
(72) Erfinder: Scheuring, Bernhard, Dipl.-Ing., W-7000 Stuttgart 10 (DE)

(56) Entgegenhaltungen:
- DE-A- 3 145 376
- NL-A- 98 823

## Beschreibung

Die Erfindung betrifft ein Verfahren nach dem Oberbegriff des Anspruches 1 und eine Vorrichtung nach dem Oberbegriff des Anspruches 3.

Durch eine Stoffvereinigung von plastizierbaren Kunststoffmassen mit Füll-bzw. Verstärkungsstoffen werden Füllstoffkonzentrate bzw. mit Verstärkungsstoffen aufbereitete Kunststoffprodukte erzielt.

Bei einer aus der DE-OS 3 720 325 bekannten Aufbereitung von plastischen Massen zur Herstellung von sogenanntem Füllstoff-Masterbatch werden die Mischgutkomponenten in einem zweistufigen Mischvorgang zunächst vorgemischt bzw. dispergiert und das so erhaltene Zwischenprodukt in einer zweiwelligen als Z-Kneter bekannten Misch- und Knetmaschine weiter dispergiert und zur Formgebung mit einer am Mischbehälterboden bis in einen Auspresszylinder sich erstreckenden Schnecke ausgetragen.

Die als Ausgangsstoffe pulverförmig oder auch flüssig vorliegenden Kunststoffe werden zusammen mit dem Füllstoff bereits einer als Vorstufe wirksamen Misch- und Knetmaschine dosiert zugegeben, um die Füllstoffe mit den niederviskosen bzw. aufgeschmolzenen Kunststoffen zu dispergieren.
Entgegen dieser relativ aufwendigen Vorgehensweise ist es vielfach bereits ausreichend ein Aufschmelzen der plastifizierbaren Massen und das Dispergieren mit den Füllstoffen in nur einem Mischvorgang vorzunehmen.

Es ist daher auch nicht mehr neu, die plastifizierbare Masse in einer z.B. als Z-Kneter bekannten Misch- und Knetmaschine vorab aufzuschmelzen, um anschliessend den Füll- oder Verstärkungsstoff einzumischen. Um ein Aufschmelzen der plastifizierbaren Massen im Knetbehälter zu bewerkstelligen, muss ein ausreichender Wärmeübergang vom beheizbaren Knetbehälter auf das Mischgut sichergestellt sein, wogegen zu einem geringen Teil Wärme in die Masse auch durch Scherenergie über die Mischschaufeln eingebracht wird.

Diese Vorgehensweise erfordert nicht nur einen hohen Energiebedarf, auch die Qualität der so aufbereiteten Kunststoffprodukte ist nicht immer befriedigend.

Der Erfindung liegt die Aufgabe zugrunde, die Aufbereitung von plastifizierbaren Massen so zu verbessern, dass eine Qualitätssteigerung erfolgt und für das Plastifizieren ein verringerter Energieaufwand erforderlich ist.
Erfindungsgemäss erfolgt dies durch die im Kennzeichnungsteil des Patentanspruches 1 in Verbindung mit der gattungsgemässen Art angegebenen Verfahrensmerkmale. Die Aufgabe wird weiterhin bei einer Vorrichtung der gattungsgemässen Art durch die im Kennzeichnungsteil des Patentanspruches 3 angegebenen Merkmale gelöst.
überraschend wurde zunächst gefunden, dass durch Aufschmelzen des zu plastifizierenden Polymers ausserhalb des Mischbehälters eine wesentliche Qualitätsverbesserung der auszuformenden Kunststoffmasse erzielt werden kann, was sich daraus erklären lässt, dass die spezifische Verweildauer des Polymers im Mischbehälter stets konstant bleibt. Da der Aufschmelzvorgang und der Mischvorgang in unterschiedlichen Räumen erfolgen, bleiben Aufschmelzdauer und Mischdauer für die Masseteilchen konstant. Eine thermische und mechanische Schädigung nach einem Mischzyklus etwa verbleibender Restmengen im Mischbehälter bzw. im Auspresszylinder ist nahezu ausgeschlossen.
Von besonderer Bedeutung ist weiterhin, dass der Aufschmelz-und Auspressvorgang einheitlich in einer Vorrichtung, nämlich in der Auspresseinrichtung vorgenommen werden, so dass während des Eintrags des schmelzflüssigen Polymers eine Spülung des Eintragsorgans erfolgt und verbliebene abrasive Partikel mit dem aufgeschmolzenen Polymer dem Mischbehälter zugeführt werden. Als Resultat hieraus wird eine erhöhte Standzeit der als Eintragsorgan wirksamen Extruderschnecke erzielt.

Da die Aufschmelzzeit in der Extruderschnecke gegenüber der sonst üblichen Aufschmelzdauer im Mischbehälter wesentlich verringert ist und dadurch bedingte Totzeiten entfallen, ergibt sich eine wesentlich geringere Taktzeit sowie ein deutlich geringerer Wärmeenergiebedarf.

In einer Weiterbildung der Erfindung nach den Merkmalen des Anspruches 2 wird das Dispergieren der Füllstoffe begünstigt.

Zur Durchführung des Verfahrens dient eine Vorrichtung gemäss Anspruch 3. Eine danach ausgebildete Extruderschnecke in Verbindung mit der weiterhin vorgesehenen Polymer-Zugabe in den Förderzylinder ermöglicht ein vom Mischbehälter und dessen Mischorgan getrenntes Aufschmelzen des polymeren Kunststoffes. Dadurch kann ein konstruktiv und zeitlich aufwendiges Temperieren des Mischbehälters entfallen, womit eine beträchtliche Energieeinsparung verbunden ist. Eine Verringerung der Aufschmelzzeit, bedingt durch den im Volumen relativ gering bemessenen Füllraum des Förderzylinders, ermöglicht eine Verringerung der Gesamtmischdauer aufgrund dadurch verringerter Totzeiten.
Die ohnehin schon bisher vorhandene Extruderschnecke zum Auspressen des Mischgutes kann bei geringer Modifizierung für eine weitere Aufgabe, das Aufschmelzen des Polymeren, herangezogen werden.

Dies ermöglicht auch eine gezielte Beseitigung von Restmonomeren vor dem Schmelzeeintrag in den Mischbehälter. Da die Entgasung im Förderzylinder der Extruderschnecke erfolgt, kann auf einfache Weise ein die Entgasung begünstigendes Vakuum angelegt werden.

In einer weiteren Ausgestaltung der Erfindung sind zwei ineinandergreifende und sich gegenseitig abstreifende Extruderschnecken im Extrudergehäuse vorgesehen, wodurch ein effizienter Aufschmelzzyklus, auch einschliesslich einer etwa vorzunehmenden Entgasung erzielt ist.
Die hierbei erreichte erweiterte Mischwirkung im Förderzylinder während des Mischgut-Austrages trägt vorteilhaft zu einer Verkürzung der Gesamtmischzeit bei.

Die in einer weiteren Ausbildung der Erfindung vorgesehene Einschleusung des Polymeren wie auch der Zusatzstoffe ermöglicht eine quasi kontinuierliche Betriebsweise. Die Dosiervorgänge erfolgen hiermit bereits während des Schmelz- bzw. Mischzyklus. Die Materialien die zugeführt werden sollen, werden vor dem Einbringen in den Mischbehälter bzw. in den Förderzylinder ausreichend entlüftet, so dass bei der Schüttung verursachte Lufteinschlüsse eliminiert werden.

Weitere Einzelheiten der Erfindung ergeben sich aus der nachfolgenden Beschreibung anhand schematischer Zeichnungen. Es zeigt
- Fig. 1: die Misch- und Knetmaschine in einem Längsschnitt
- Fig. 2: einen Querschnitt durch die Maschine längs der Schnittlinie II-II
- Fig. 3: einen Querschnitt einer weiteren Ausbildung der Maschine längs der Schnittlinie III-III.

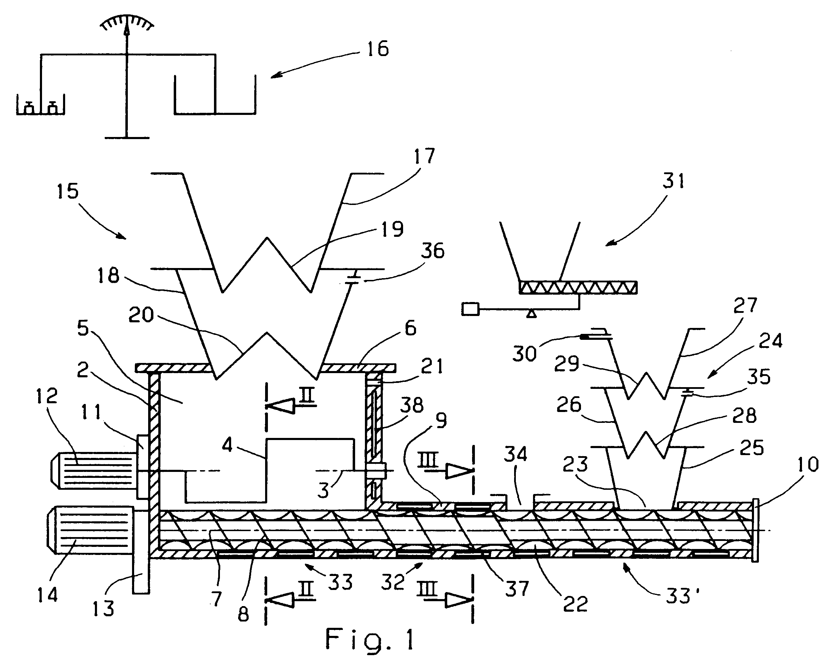

Die in Fig. 1 gezeigte Misch- und Knetmaschine weist in einem Mischbehälter 2 um parallele horizontale Achsen 3, 3' sich drehende Misch- und Knetflügel 4 auf. Die Mischkammer 5 des Mischbehälters 2 ist durch einen Behälterdeckel 6 verschlossen. Direkt unterhalb des Behälterdeckels 6 ist im Mischbehälter 2 eine Entlüftungsöffnung 21 vorgesehen. Am Boden des Mischbehälters 2 ist parallel zu den Misch- und Knetflügeln 4 längs der horizontalen Achse 7 eine Extruderschnecke 8 angeordnet, welche sich bis in einen dem Mischbehälter 2 stirnseitig angesetzen Förderzylinder 9 erstreckt. Am auslassseitigen Ende des Förderzylinders 9 befindet sich in dessen Zylinderbohrung 22 eine Lochplatte 10 zur Formgebung des mit der Extruderschnecke 9 ausgetragenen Mischgutes.

Der Antrieb der Misch- und Knetflügel 4 erfolgt über einen mit einem Untersetzungsgetriebe 11 verbundenen Elektromotor 12, während die Extruderschnecke 8 durch einen mit einem Wendegetriebe 13 gekoppelten Elektromotor 14 angetrieben wird.

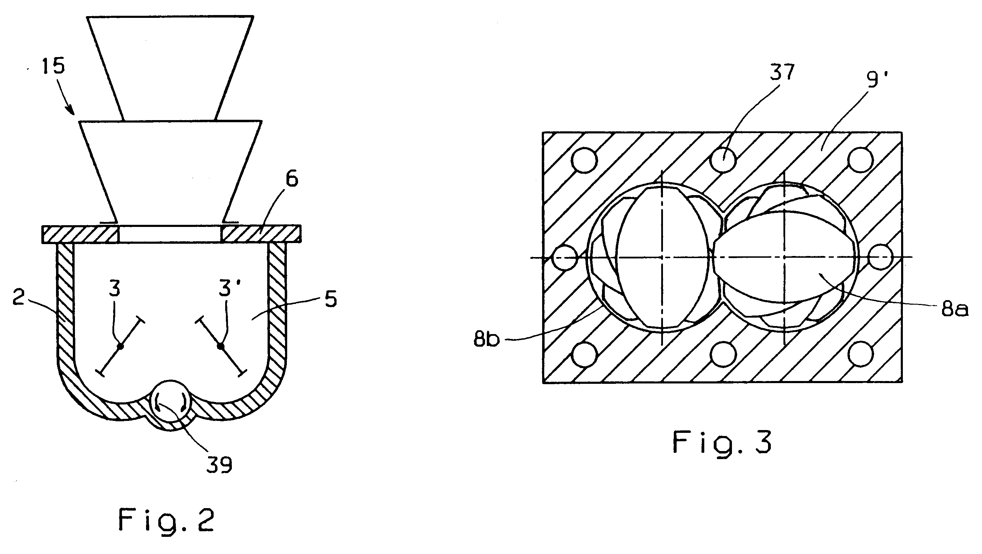

Mit Hilfe des Wendegetriebes 13 kann die Extruderschnecke 8 in zwei Drehrichtungen gemäss Pfeilrichtung 39 (Fig.2) betrieben werden, so dass eine Förderwirkung der Extruderschnecke 8 in Richtung der Lochplatte 10 für den Austrag bzw. in Richtung der Mischkammer 5 für die Aufbereitung erreicht werden kann.

Für die dosierte Zugabe von Füllstoffen, Verstärkungsstoffen bzw. sonstiger Additive ist der Behälterdeckel 6 mit einer Trichterschleuse 15, die der Aufnahme dieser Stoffe dient, fest verbunden. Der Trichterschleuse 15 wiederum ist eine Dosiereinrichtung 16, für die nach Gewicht dosierte Zugabe der Stoffe vorgeordnet.
Die Trichterschleuse 15 besteht aus einem ersten Trichter 17 für die Aufnahme des Dosiergutes. Diesem Trichter 17 ist ein zweiter Trichter 18 nachgeordnet, der als Vakuumkammer einer abrufbaren Speicherung des aus dem Trichter 17 übernommenen Dosiergutes dient und mit einer Entlüftungsöffnung 36 ausgebildet ist. Sowohl der Trichter 17 wie auch der Trichter 18 sind mit einem aufklappbaren Trichterboden 19 bzw. 20 ausgestattet, so dass das aufgenommene Dosiergut, betätigt durch eine nicht näher dargestellte Steuereinrichtung, in den jeweils unter dem Trichterboden 19 angeordneten Trichter 18 bzw. der darunter liegenden Mischkammer 5 entleert werden kann.

Der Förderzylinder 9 ist im Bereich der Lochplatte 10 mit einer Zugabeöffnung 23 in die Zylinderbohrung 22 ausgebildet, wodurch der Extruderschnecke 8 aufzuschmelzendes Polymer in Pulverform zugeführt werden kann. Da dieses Polymer ebenfalls dosiert zugeführt wird, ist der Zugabeöffnung 23 ebenfalls eine Trichterschleuse 24 dicht vorgeordnet.

Sie ist aus drei dicht übereinander angeordneten Trichtern 25, 26 und 27 gebildet, wobei die Trichter 26 und 27 jeweils ebenfalls einen aufklappbaren Trichterboden 28 bzw. 29 aufweisen. Die Trichterschleuse 24 dient der Zuführung von über eine Dosiereinrichtung 31 gravimetrisch zudosiertem Polymer, sowie zu dessen Speicherung und gesteuerten Abgabe auf Abruf. Hierfür dienen herkömmlich bekannte Antriebe und Steuereinrichtungen, die hier nicht näher dargestellt sind. Zur verbesserten Behandlung von hygroskopischen bzw. sauerstoffempfindlichem Polymer weist der Trichter 27 eine Zuführung 30 für Stickstoff auf, der im nachfolgenden Trichter 26 zusammen mit Restmonomeren über eine Absaugöffnung 35 evakuiert wird.

Nach Zuführung des pulverförmigen Polymers über die Trichterschleuse 24 in den Förderzylinder 9 wird das Polymer der Aufschmelzzone 32 der Extruderschnecke 8 zugeführt. Die Aufschmelzzone 32 ist in bekannter Weise aus einer Umwandlungszone mit gegenüber den Förderzonen der Extruderschnecke 8 flach geschnittenen Schneckengängen gebildet, so dass eine Kompression und Verflüssigung des Polymers eintritt. Die Aufschmelzzone 32 liegt im Extruderzylinder 9 ausserhalb des Bereiches der Mischkammer 5. Ihr ist eine Förderzone 33 nachgeordnet, die in die Mischkammer 5 einmündet. Der Aufschmelzzone 32 in Förderrichtung der Schmelze vorgeordnet ist eine Entlüftungsöffnung 34 im Anschluss an die Förderzone 33' zur Beseitigung restlicher Gaseinschlüsse.

Durch Temperierkanäle 37 im Bereich der Aufschmelzzone 32 und der Förderzone 33 wird die Kunststoffschmelze temperiert.
Nach Fig. 3 ist der Förderzylinder 9' mit zweigängigen, ineinandergreifenden Extruderschnecken gebildet aus hintereinander angeordneten Knetscheiben 8a, 8b, bestückt. Sie sind dann vorteilhaft, wenn dem Mischgut erhöht Scherenergie zugeführt werden soll, um einen besseren Aufschluss und Verteilung von Zusatzstoffen zu erzielen.

Zur Herstellung von beispielsweise mit Füllstoffen oder Verstärkungsstoffen wie Kreide, Kaolin oder Kohlefasern verstärkter Kunststoffen wird zunächst eine vordosierte Menge Polymer in die Trichterschleuse 24 eindosiert und der Extruderschnecke 8 chargenweise gesteuert zugeführt. Diese Menge wird sodann durch die Extruderschnecke 8, welche ein- oder zweiwellig ausgebildet sein kann, in den Mischbehälter 2 gefördert und auf dem Weg dorthin aufgeschmolzen.
Nach dem Eintrag der aufgeschmolzenen Masse in den mittels Kammern 38 über ein Temperiermedium beheizbaren Mischbehälter 2 wird der vordosierte Füllstoff oder Verstärkungsstoff über die Trichterschleuse 15 dem Mischbehälter 2 zusätzlich zugegeben.

Nach der Beschickung des Mischbehälters 2 erfolgt eine homogene Vermischung bzw. Dispergierung der Komponenten durch die in Drehung versetzten Misch- und Knetflügel 4. Während des Mischvorganges bleibt die in den Mischbehälter 2 gerichtete Förderwirkung der Extruderschnecke 8 erhalten um den Mischvorgang zu unterstützen. Nach Beendigung des Mischzyklus wird das Mischgut mit in entgegengesetzter Richtung wirksamer Förderwirkung über die Lochplatte 10 ausgetragen.

## Patentansprüche

1. Verfahren zur Herstellung von mit Zusatzstoffen gefüllten Kunststoffen in einer Misch- und Knetmaschine mit einem Mischbehälter (5), welchem ein Polymer und die Zusatzstoffe zugeführt und nach Beendigung des Mischvorganges durch eine vom Behälterboden bis in einen Auspresszylinder sich erstreckende Auspresseinrichtung ausgetragen werden, dadurch gekennzeichnet, dass das Polymer zu Beginn des Mischvorganges in die Auspresseinrichtung dosiert eingebracht, in einer Aufschmelzzone (32) aufgeschmolzen und dem Mischbehälter (5) zur homogenen Einmischung der in diesen dosiert eingebrachten Zusatzstoffe austragsseitig zugeführt wird.

2. Verfahren nach Anspruch 1, dadurch gekennzeichnet, dass die Zusatzstoffe nach Beendigung des Eintrages der Polymerschmelze dem Mischbehälter (5) dosiert zugeführt werden.

3. Vorrichtung zur Herstellung von mit Zusatzstoffen gefüllten Kunststoffen in einer Misch- und Knetmaschine mit im Mischbehälter (5) um eine waagrechte Achse (3, 3') sich drohenden Misch- und Knetflügeln (4) und zumindest einer im Behälterboden bis in die Zylinderbohrung des Gehäuses eines Förderzylinders (9) sich erststreckenden und darin mittels Wendegetriebe (13) drehumkehrbar angeordneten Extruderschnecke (8), dadurch gekennzeichnet, dass die Extruderschnecke (8) in einem Teilbereich der Zylinderbohrung (22) eine Aufschmelzzone (32) bildet, und das Gehäuse der Zylinderbohrung (22) in einem aus Aufschmelzzone (32) und Förderzonen (33, 33') gebildeten Abstand zum Mischbehälter (2) eine Zugabeöffnung (23) für Polymere aufweist.

4. Vorrichtung nach Anspruch 3, dadurch gekennzeichnet, dass der Aufschmelzzone (32) der zumindest eine Extruderschnecke (8), eine Entlüftungsöffnung (34) vorgeordnet ist.

5. Vorrichtung nach den Ansprüchen 3 und 4, dadurch gekennzeichnet, dass die Zylinderbohrung (22) aus zwei achsparallel unter Bildung von Zwickeln einander durchdringenden Bohrungen gebildet ist und zwei gleichsinnig antreibbare Extruderschnecken (8a, 8b) aufnimmt.

6. Vorrichtung nach Anspruch 3, dadurch gekennzeichnet, dass dem Mischbehälter (2) für die Zugabe der Zusatzstoffe und der Zugabeöffnung (23) der Zylinderbohrung (22) für das Polymere jeweils eine Trichterschleuse (15,24) vorgeordnet ist.

## Claims

1. Method for the production of synthetic materials, which are filled with additives, in a mixing and masticating machine with a mixing container (5), to which a polymer and the additives are fed and from which they are discharged after termination of the mixing process by an ejecting equipment extending from the container base into an ejecting cylinder, characterised thereby, that the polymer is introduced metered into the ejecting equipment at the beginning of the mixing process, melted in a melting zone (32) and fed to the mixing container (5) at the discharge end for the homogeneous mixing-in of the additives introduced metered into this.

2. Method according to claim 1, characterised thereby, that the additives are fed metered to the mixing container (5) after termination of the input of the polymer melt.

3. Device for the production of synthetic materials, which are filled with additives in a mixing and masticating machine with mixing and masticating blades (4), which rotate about an horizontal axis (3, 3') in the mixing container (5), and at least one extruder worm (8), which extends in the container base into the cylinder bore of the housing of a conveying cylinder (9) and is arranged to be reversibly rotatable therein by means of a reversing gear (13), characterised thereby, that the extruder worm (8) forms a melting zone (32) in a partial region of the cylinder bore (22) and the housing of the cylinder bore (22) displays an input opening (23) for polymers at a spacing, which is formed by the melting zone (32) and conveying zones (33, 33'), from the mixing container (5).

4. Device according to claim 3, characterised thereby, that at least one extruder worm (8) and a ventilation opening (34) are arranged upstream of the melting zone (32).

5. Device according to the claims 3 and 4, characterised thereby, that the cylinder bore (22) is formed of two axially parallel bores each interpenetrating the other with the formation of spandrels and of two extruder worms (8a, 8b), which are drivable in like sense.

6. Device according to claim 3, characterised thereby, that a respective funnel gate (15, 24) is arranged upstream of the mixing container (5) for the addition of the additives and of the input opening (23) of the cylinder bore (22) for the polymer.

## Revendications

1. Procédé de préparation de matières plastiques remplies ou garnies de matières additionnelles, dans une machine de mélangeage et de malaxage comportant un récipient (5) de mélangeage, auquel sont acheminés un polymère et les matières additionnelles, après achèvement de l'opération de mélangeage, ce polymère et ces matières additionnelles sont déchargées par un dispositif d'expression ou d'extrusion s'étendant du bas du récipient jusque dans un cylindre d'expression, procédé caractérisé en ce qu'au début de l'opération de mélangeage le polymère est introduit de façon dosée dans le dispositif d'expression, ce polymère est fondu dans une zone (32) à rôle de fusion et il est acheminé par le côté sortie dans le récipient (5) de mélangeage pour y subir une incorporation par mélangeage uniforme des matières additionnelles introduites de façon dosée dans ce récipient.

2. Procédé selon la revendication 1, caractérisé en ce qu'après l'introduction de la masse de polymère fondue, les matières additionnelles sont acheminées de façon dosée au récipient (5) de mélangeage.

3. Dispositif pour la préparation de matières plastiques emplies ou garnies de matières additionnelles dans une machine de mélangeage et de malaxage comportant, dans le récipient (5) de mélangeage, des palettes (4) de mélangeage et de malaxage tournant autour d'un axe (3, 3') horizontal et au moins une vis extrudeuse (8) s'étendant dans le bas du récipient jusque dans l'alésage du cylindre du corps d'un cylindre (9) d'avance et qui est monté de façon à pouvoir tourner avec inversion possible de sens grâce à un entraînement réversible (13), dispositif caractérisé en ce que la vis extrudeuse (8) forme, dans une partie de l'alésage (22) du cylindre, une zone (32) à rôle de fusion et en ce que, à une certaine distance du récipient mélangeur (2), constituée par une zone (32) de réalisation d'une fusion et par des zones (33, 33') d'avance, le corps logeant l'alésage (22) de cylindre présente une ouverture (23) d'admission de polymères.

4. Dispositif selon la revendication 3, caractérisé en ce qu'une ouverture (34) de départ d'air est disposée en amont de la zone (32) de l'au moins une vis extrudeuse (8) dans laquelle se réalise une fusion de la matière.

5. Dispositif selon la revendication 3 et 4, caractérisé en ce que l'alésage (22) de cylindre est constitué de deux alésages à axes parallèles avec formation de coins à interpénétration mutuelle et cet alésage loge deux vis extrudeuses (8a, 8b) pouvant être entraînées dans le même sens.

6. Dispositif selon la revendication 3, caractérisé en ce qu'un sas de trémie (15, 26) est à chaque fois disposé en amont du récipient (2) de mélangeage pour l'addition des matières additionnelles et en amont de l'ouverture (23) de l'alésage (22) de cylindre pour l'admission du polymère.
